# EUROPEAN PATENT APPLICATION

(11) **EP 4 773 424 A1**
(43) Date of publication of application: **08.07.2026**
(21) Application number: 25869587.3
(22) Date of filing: 11.08.2025
(51) Int. Cl.: H01M 50/569, H01M 50/298, H01M 50/249, H01M 10/42, H01M 50/262, H01M 50/242

(54) **BATTERY MODULE, AND BATTERY PACK AND VEHICLE INCLUDING SAME**

(30) Priority: 08.10.2024 KR 20240136215; 21.04.2025 KR 20250051317
(71) Applicant: LG ENERGY SOLUTION, LTD., Seoul 07335 (KR)
(72) Inventor: LEE, Minju, Daejeon 34122 (KR); HUR, Jae Yong, Daejeon 34122 (KR); LIM, Jeong Hoon, Daejeon 34122 (KR)
(74) Representative: Plasseraud IP
(86) International application number: PCT/KR2025/012113
(87) International publication number: WO 2026/079622

(57) **Abstract**

To achieve the above object, a battery module according to an exemplary embodiment of the present disclosure may include a cell frame configured to accommodate a battery cell; a bracket mounted on the cell frame; a fixing member mounted to the bracket and configured to secure a wire harness arranged above the bracket; and a fastening member configured to fasten the cell frame and the bracket.

## Description

### CROSS-REFERENCE TO RELATED APPLICATIONS

This application claims benefit and priority to Korean Patent Application No. KR 10-2024-0136215, filed on August 08, 2024, with the Korean Intellectual Property Office, the disclosure of which is incorporated herein in its entirety by reference.

### TECHNICAL FIELD

The present disclosure relates to a battery module, and a battery pack and a vehicle including the same, and more particularly, to a battery module having a stable wire harness fixing structure, and a battery pack and a vehicle including the same.

### BACKGROUND

A wire harness is wiring that supplies power required to operate all electrical components in a vehicle and transmits electric signals to respective electronic control modules. The wire harness is attracting attention as a key component for electric vehicles.

A battery module provided in a vehicle using a battery pack as a fuel source, such as an electric vehicle or a hybrid electric vehicle, is also equipped with a wire harness to transmit voltage information on battery cells.

A wire harness may include a plurality of cables, terminals, and connectors. If the wire harness is not fixed when provided in a module frame, the wire harness may be damaged by collision with other components during vibration or impact. Even when the wire harness is fixed, the wire harness may be damaged if it is fixed in a manner interfering with nuts provided on sidewalls of a frame.

**In** a battery module according to the related art, a wire harness is fixed by directly assembling a bend clip to a cell frame, which is an injection-molded product. When securing the bend clip to the injection-molded product in this way, a sufficient space in the injection-molded product for securing the bend clip needs to be ensured in order to stably secure the wire harness. However, when such a space is not ensured, it is difficult to stably secure the wire harness.

### SUMMARY

The present disclosure has been made in view of the problems of the related art described above, and an object thereof is to provide a battery module capable of stably securing a wire harness even when a space of an injection-molded product for securing the wire harness is insufficient, and a battery pack and a vehicle including the same.

To achieve the above object, a battery module according to the present disclosure may include a cell frame configured to accommodate a battery cell; a bracket mounted on the cell frame; a fixing member mounted to the bracket and configured to secure a wire harness arranged above the bracket; and a fastening member configured to fasten the cell frame and the bracket.

The fixing member may maintain a spaced state of the wire harness from the bracket and the fastening member.

The cell frame may include a first mounting surface on which the bracket is seated, and a first fastening portion vertically extending upward from both edges of the first mounting surface. The bracket may include a second mounting surface seated on the first mounting surface, and a second fastening portion vertically extending upward from both edges of the second mounting surface.

The fastening member may include a first fastening member configured to fasten the first and second fastening portions to each other, and a second fastening member configured to fasten the first and second mounting surfaces to each other.

A portion of a bracket section of the wire harness arranged above the bracket, the portion being secured by the fixing member, may be positioned farther from the first fastening member than other portions.

The wire harness may be arranged above the second mounting surface, and a portion of the first fastening member may protrude from the first and second fastening portions toward the wire harness.

The first and second fastening portions may be arranged in a linear shape, and the wire harness may be arranged in a curved shape by the fixing member.

A plurality of bracket holes through which the second fastening member passes may be formed to be spaced apart from each other in the second mounting surface.

The fixing member may be fixed to at least one of the bracket holes.

The fixing member may include a stud bolt having one end portion configured to pass through the bracket hole; a nut arranged between the first and second mounting surfaces and configured to be fastened to one end portion of the stud bolt; and a wire clip configured to be fastened to the other end portion of the stud bolt and to support the wire harness.

The wire clip may include a stud fastening portion configured to be fitted and fastened to the stud bolt, and a clip portion extending in one direction from the stud fastening portion and configured to support the wire harness.

The clip portion may be arranged in a direction opposite to the first and second fastening portions with respect to the stud bolt, allowing a portion of the wire harness secured by the clip portion to be spaced farther from the first fastening member than other portions.

According to the battery module of the present disclosure, and the battery pack and the vehicle including the same, the wire harness arranged above the bracket is secured using the fixing member, so that the wire harness can be stably secured even when a space for securing the wire harness to the cell frame is insufficient. In particular, even when vibrations generated during vehicle traveling or testing are transmitted to the wire harness, damage to the wire harness due to contact with other members can be prevented, because there is no risk of movement of the wire harness.

In addition, in a structure in which an edge of a bracket is fastened to a cell frame using a fastening member, if the wire harness is arranged in a linear shape, in parallel with the edge of the bracket, the wire harness may be damaged due to interference between the wire harness and the fastening member. Therefore, when securing the wire harness by the fastening member, interference between the wire harness and the fastening member can be prevented by arranging the wire harness in a curved shape.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating a vehicle equipped with a battery pack according to an exemplary embodiment of the present disclosure.
FIG. 2 is a perspective view of the battery pack according to an exemplary embodiment of the present disclosure.
FIG. 3 is an exploded perspective view of FIG. 2.
FIG. 4 is a side view of a battery module according to an exemplary embodiment of the present disclosure.
FIG. 5 is an enlarged view of a wire harness in FIG. 4 secured by first and second fixing members.
FIG. 6 is a cross-sectional view taken along line A-A of FIG. 5.
FIG. 7 is a perspective view of the first fixing member.
FIG. 8 is an exploded perspective view of the first fixing member.
FIG. 9 is a plan view of a wire clip.
FIG. 10 is a cross-sectional view illustrating a state in which the wire clip, a stud bolt, and a nut are separated.
FIG. 11 is an enlarged view illustrating the wire harness secured to a cell frame by the second fixing member.
FIG. 12 is a perspective view of the second fixing member.
FIG. 13 is a side view of the second fixing member.

### DETAILED DESCRIPTION

In the following detailed description, reference is made to the accompanying drawing, which forms a part hereof. The illustrative embodiments described in the detailed description, drawing, and claims are not meant to be limiting. Other embodiments may be utilized, and other changes may be made, without departing from the spirit or scope of the subject matter presented here.

Hereinafter, a battery module according to a preferred exemplary embodiment of the present disclosure, and a battery pack and a vehicle including the battery module will be described in detail with reference to the accompanying drawings.

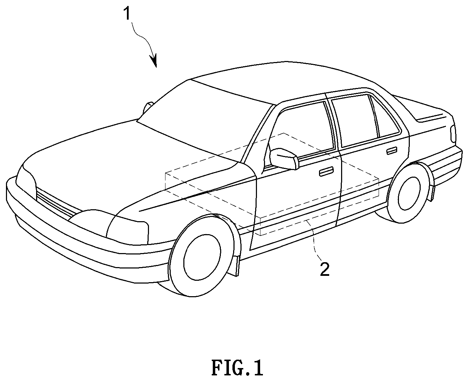

FIG. 1 is a view illustrating a vehicle equipped with a battery pack according to an exemplary embodiment of the present disclosure.

A vehicle 1 according to an exemplary embodiment of the present disclosure may be an electric vehicle or a hybrid electric vehicle, and may include one or more battery packs 2. The battery pack 2 can supply electric energy required for various operations of the vehicle 1. For example, the vehicle 1 may further include a vehicle body, a motor, a control device such as an electronic control unit (ECU), and the like.

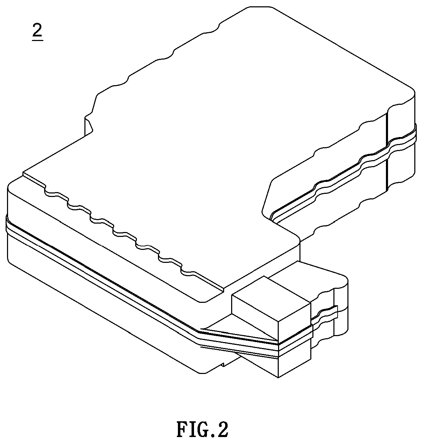

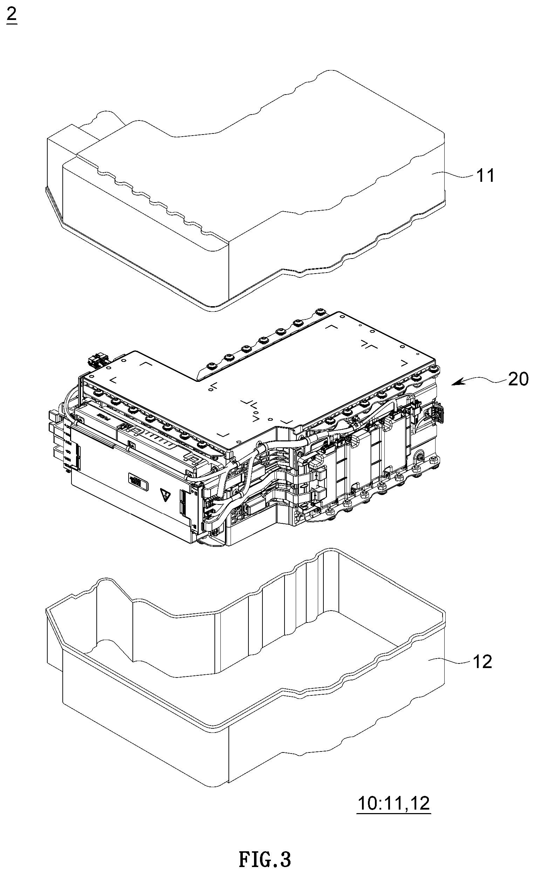

FIG. 2 is a perspective view of the battery pack according to an exemplary embodiment of the present disclosure, and FIG. 3 is an exploded perspective view of FIG. 2.

The battery pack 2 according to an exemplary embodiment of the present disclosure includes a pack case 10 and a battery module 20.

The pack case 10 includes an upper case 11 and a lower case 12 forming a sealed internal space. A groove-shaped accommodating space for accommodating the battery module 20 is formed in the upper case 11 and the lower case 12. Fastening of the upper case 11 and the lower case 12 is completed by fastening, with a fastening member, a flange portion formed at a lower end of the upper case 11 and a flange portion formed at an upper end of the lower case 12 while the flange portions are abutted against each other. A gasket for maintaining airtightness may be provided between the two flange portions abutted against each other.

The battery module 20 is accommodated in the pack case 10 and may include a plurality of electrically connected battery cells. A voltage of the battery module 20 may be determined by series/parallel connection of the battery cells included therein. In the present exemplary embodiment, only one battery module 20 is provided. However, the present disclosure is not limited thereto, and a plurality of battery modules may be accommodated in the pack case 10. The battery module 20 may be provided with a wire harness to transmit voltage information on battery cells, and the like.

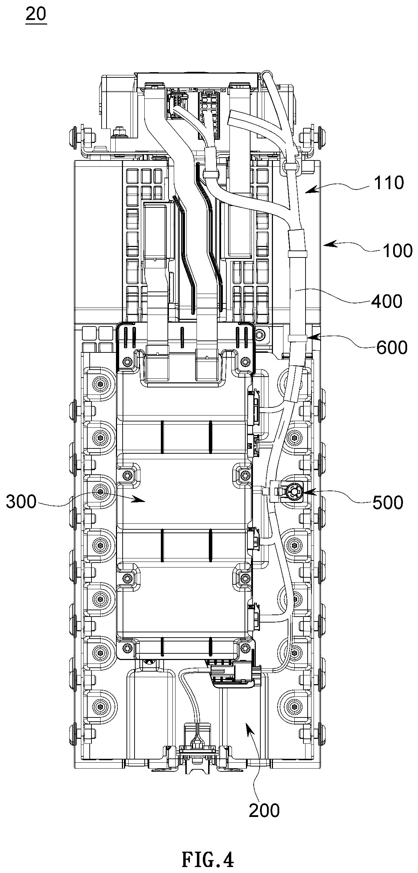

FIG. 4 is a side view of a battery module according to an exemplary embodiment of the present disclosure.

The battery module 20 according to an exemplary embodiment of the present disclosure includes a cell assembly 100, a bracket 200, a BMS circuit board 300, a wire harness 400, a first fixing member 500, and a second fixing member 600.

The cell assembly 100 is an assembly of battery cells including a plurality of battery cells. When the battery cells included in the cell assembly 100 are pouch-type cells, they may be configured to be stacked in one direction. The battery cells may be can-type cells in addition to pouch-type cells. The cell assembly 100 may include a cell frame 110 for stacking battery cells. The cell frame 110 may accommodate battery cells to prevent movement thereof and guide assembly of the battery cells such that the battery cells are stacked on top of each other. The cell frame 110 may be an injection-molded product made of a non-thermally conductive plastic or other resin.

The bracket 200 may be mounted on one surface or both surfaces of the cell frame 110 to cover one surface or both surfaces of the cell frame 110. The bracket 200 may serve to protect the cell assembly 100 from external impact and the like, and may be a press-molded product made of a metal material such as steel to ensure rigidity.

The BMS circuit board 300 may be mounted on a surface of the bracket 200. In addition to the BMS circuit board 300, other electrical components such as a relay assembly may be positioned on the surface of the bracket 200.

A BMS (Battery Management System) refers to a battery management device that controls overall charging and discharging operations of battery cells, and may be a component typically included in the battery pack 2. Such a BMS may be implemented in the form of a printed circuit board on which a control circuit is printed, and various components such as a memory, a capacitor, a resistor, and a diode may be mounted in a concentrated manner on the BMS circuit board 300.

The wire harness 400 is connected to the BMS circuit board 300 to transmit voltage information on battery cells, and the like, and may be secured to the cell frame 110 and the bracket 200.

The first fixing member 500 is mounted on the bracket 200 to secure the wire harness 400 to the bracket 200 without movement.

The second fixing member 600 is mounted on the cell frame 110 to secure the wire harness 400 to the cell frame 110 without movement.

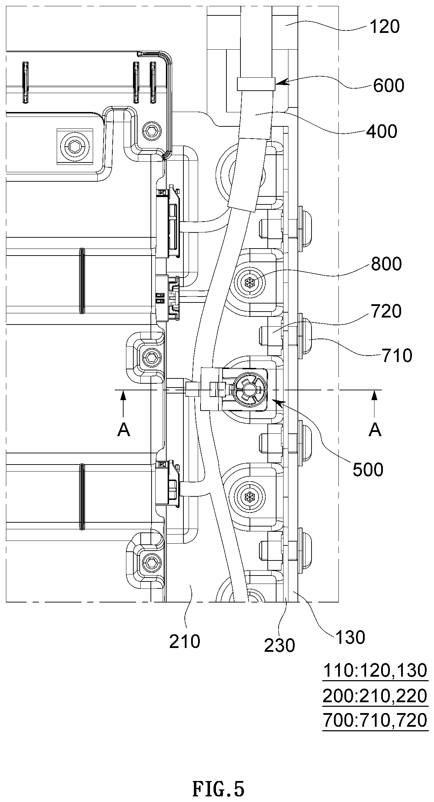

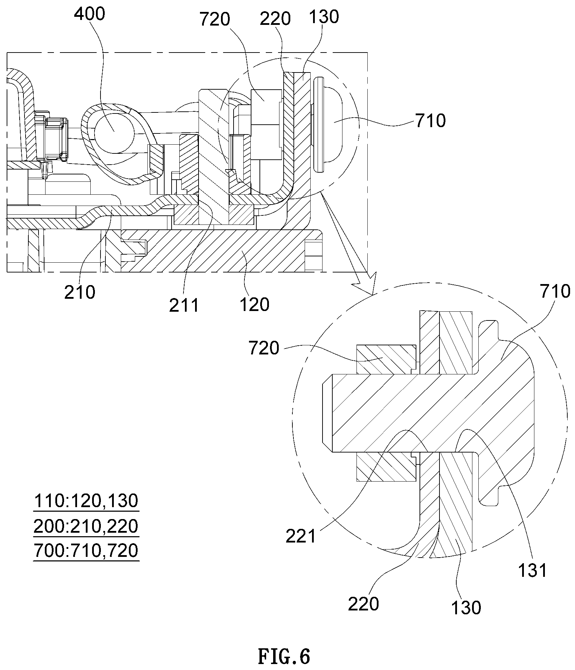

FIG. 5 is an enlarged view of the wire harness in FIG. 4 secured by the first and second fixing members, and FIG. 6 is a cross-sectional view taken along line A-A of FIG. 5.

The cell frame 110 may include a first mounting surface 120 on which the bracket 200 is seated, and a first fastening portion 130 vertically extending upward from both edges of the first mounting surface 120.

The bracket 200 may include a second mounting surface 210 seated on the first mounting surface 120, and a second fastening portion 220 vertically extending upward from both edges of the second mounting surface 210.

The bracket 200 is mounted on one surface or both surfaces of the cell frame 110, and is fastened by a fastening member including a bolt and a nut, and the fastening may be performed at two locations.

First fastening may be made by fastening the first and second fastening portions 130 and 220 to each other using a first fastening member 700. The first fastening member 700 may include a bolt 710 and a nut 720.

The bolt 710 constituting the first fastening member 700 may be fastened to the nut 720 after a threaded portion thereof passes through the first fastening portion 130 and the second fastening portion 220, respectively. As illustrated in the drawing, an end portion of the threaded portion of the bolt 710 and the nut 720 may protrude above the second mounting surface 210 of the bracket 200 from the two fastening portions 130 and 220. In addition, the wire harness 400 is arranged above the second mounting surface 210 of the bracket 200, and a portion of the first fastening member 700 may protrude toward the wire harness 400.

For the first fastening, a plurality of first frame holes 131 through which the bolts 710 pass may be formed spaced apart in the first fastening portion 130, and a plurality of first bracket holes 221 through which the bolts 710 pass may be formed spaced apart in the second fastening portion 220.

Second fastening may be made at a position spaced from the first and second fastening portions 130 and 220 toward the second mounting surface 210 of the bracket 200, by fastening the first mounting surface 120 of the cell frame 110 and the second mounting surface 210 of the bracket 200 to each other using a second fastening member 800. The second fastening member 800 may be a bolt.

To this end, a plurality of second bracket holes 211 through which the second fastening members 800 pass may be formed spaced apart in the second mounting surface 210 of the bracket 200. The second bracket holes 211 may be arranged on a straight line, in parallel with the first and second fastening portions 130 and 220.

As described above, the wire harness 400 may be secured to the bracket 200 and the cell frame 110 without movement by the first and second fixing members 500 and 600. In particular, the wire harness 400 may be maintained in a state spaced from the bracket 200 by the first fixing member 500 and may also be maintained in a state spaced from the first and second fastening members 700 and 800.

Accordingly, even when vibrations occurring during traveling or testing of a vehicle are transmitted to the wire harness 400, there is no risk of movement of the wire harness 400, and thus damage to the wire harness due to friction caused by contact with other members, such as the bracket 200, the first fastening member 700, and the second fastening member 800, can be prevented.

In addition, when securing the wire harness 400 to the bracket 200 by the first fixing member 500, the arrangement shape of the wire harness 400 can be changed from a linear shape to a curved shape so that the wire harness 400 is not interfered with by the first fastening member 700 fastening the first and second linear fastening portions 130 and 220, as illustrated in FIG. 5.

If the wire harness 400 is arranged in a linear shape, there is a risk of damage, such as a covering being peeled off due to contact with the first fastening member 700. However, as the arrangement shape of the wire harness 400 is changed to a curved shape as in the present disclosure, contact with the first fastening member 700 is prevented, so there is no risk of damage to the wire harness 400.

The first fixing member 500 may be fixed to at least one of the plurality of second bracket holes 211 to secure the wire harness 400 arranged above the bracket 200 at at least one location. The fixing position of the wire harness 400 using the first fixing member 500 may be a center portion of a section of the wire harness 400 positioned above the bracket 200, of an entire section of the wire harness 400, as illustrated in FIG. 5. The fixing position and fixing location of the wire harness 400 using the first fixing member 500 may vary depending on a length of the wire harness 400 and a gap between the wire harness 400 and the first fastening member 700 that fastens the first and second fastening portions 130 and 220.

A portion of the bracket section of the wire harness 400 arranged above the bracket 200, the portion being secured by the first fixing member 500, may be positioned farther from the first fastening member 700 that fastens the first and second fastening portions 130 and 220 than other portions. Accordingly, the wire harness 400 may be entirely positioned above the bracket 200, spaced from the first fastening member 700.

The second fixing member 600 may be fixed to a second frame hole (not illustrated) formed in a portion of a wide surface of the cell frame 110 where the bracket 200 is not mounted. The second frame hole may be positioned on a straight line with the second bracket holes 211.

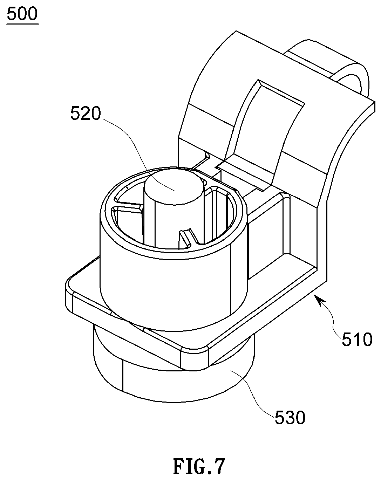

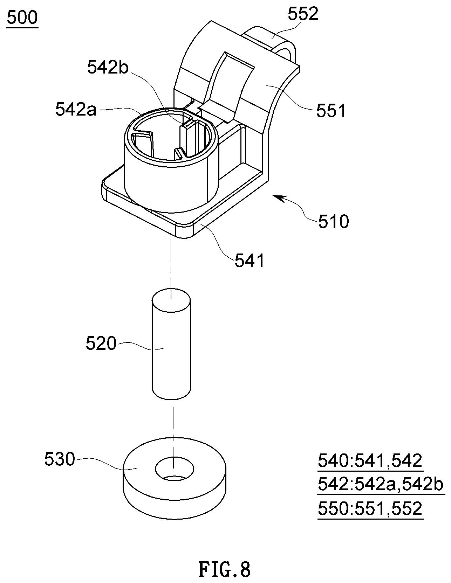

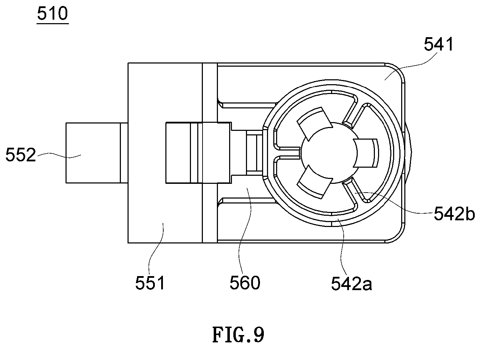

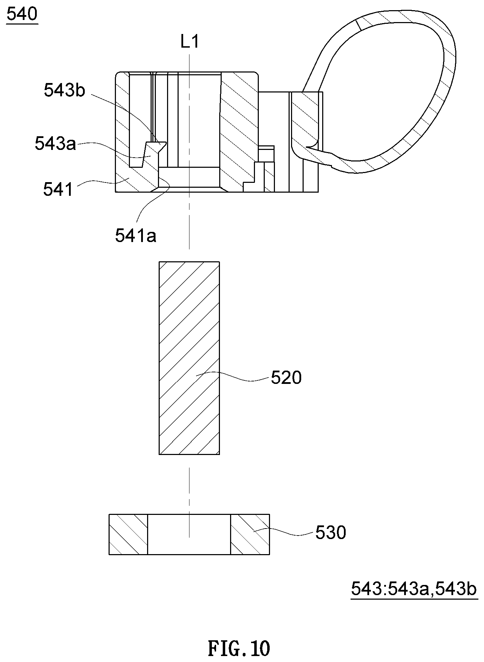

FIG. 7 is a perspective view of the first fixing member, FIG. 8 is an exploded perspective view of the first fixing member, FIG. 9 is a plan view of a wire clip, and FIG. 10 is a cross-sectional view illustrating a state in which the wire clip, a stud bolt, and a nut are separated.

The first fixing member 500 may include a wire clip 510, a stud bolt 520, and a nut 530.

The wire clip 510 surrounds and supports the wire harness 400, and includes a stud fastening portion 540 that is fastened to the stud bolt 520, and a clip portion 550 that extends to one side from the stud fastening portion 540 and surrounds and supports the wire harness 400.

The stud bolt 520 has a thread formed at one end portion, and the threaded end portion passes through the second bracket hole 211 and is then fastened to the nut 530 provided between the bracket 200 and the cell frame 110. A peripheral portion of the bracket 200, which includes the second bracket hole 211, protrudes forward of the bracket 200, and a rear surface thereof may be formed with a groove into which the nut 530 is inserted. The nut 530 may be pre-positioned when mounting the bracket 200 to the cell frame 110.

The stud fastening portion 540 includes a base 541, a guide 542, and a fastening piece 543.

The base 541 has a plate shape and is formed with a bolt through hole 541a through which the stud bolt 520 passes, and the clip portion 550 extends from one side of the base.

The guide 542 guides the fitting of the stud fastening portion 540 when fitting the stud fastening portion 540 to the stud bolt 520, and includes a cylindrical guide body 542a integrally formed on an upper surface of the base 541, and a plurality of guide protrusions 542b integrally protruding from an inner surface of the guide body 542a.

The guide body 542a extends from the upper surface of the base 541, and a center of the guide body and a center of the bolt through hole 541a may be positioned on the same vertical line. As illustrated in FIG. 9, when the guide body 542a is viewed from above, the bolt through hole 541a may be positioned at the center of the guide body. That is, a virtual center line (hereinafter referred to as 'L1') passing vertically through the center of the bolt through hole 541a may coincide with a virtual center line (hereinafter referred to as 'L1') passing vertically through the center of the guide body 542a.

The guide protrusions 542b are formed integrally with the inner surface of the guide body 542a and the upper surface of the base 541, and may be arranged radially with respect to the virtual center line L1. As illustrated in FIG. 9, when the guide body 542a is viewed from above, the guide protrusions 542b may be arranged radially around the bolt through hole 541a. Additionally, the guide protrusions 542b may be arranged at equal angular intervals. A distance between each guide protrusion 542b and the virtual center line L1 may be set equal to a radius of the bolt through hole 541a.

The fastening piece 543 is formed to protrude from the periphery of the bolt through hole 541a of the base 541 into the guide body 542a, and is in close contact with an outer surface of the stud bolt 520, thereby securing the stud fastening portion 540 to the stud bolt 520. As illustrated in FIG. 9, when the guide body 542a is viewed from above, the fastening pieces 543 may be radially arranged at equal angular intervals around the bolt through hole 541a.

The fastening pieces 543 each include a fastening body 543a protruding upward from the surface of the base 541 and radially arranged with respect to the virtual center line L1, and a fastening protrusion 543b protruding from an upper end of the fastening body 543a into a space surrounded by the fastening bodies 543a and having a pointed shape toward an end portion thereof. The fastening protrusions 543b are arranged radially with respect to the virtual center line L1.

The fastening bodies 543a are respectively arranged between the guide protrusions 542b, and the stud bolt 520 passes through a space among the fastening bodies 543a. A distance between each fastening body 543a and the virtual center line L1 may be set equal to the radius of the bolt through hole 541a.

A distance between the end portion of each fastening body 543b and the virtual center line L1 may be set smaller than the radius of the bolt through hole 541a. More specifically, a virtual circle centered on the virtual center line L1 and defined by the end portions of the fastening protrusions 543b may be formed to have an area smaller than a cross-sectional area of the stud bolt 520.

Therefore, when fitting the stud fastening portion 540 to the other end of the stud bolt 520, the fastening protrusions 543b are pushed by the stud bolt 520 and deflect outward. At this time, the upper ends of the fastening bodies 543a also deflect outward. Since the fastening pieces 543 have the characteristic of returning to their original state by their own elasticity, when a bottom surface of the stud fastening portion 540 comes into contact with the surface of the bracket 200 and the fitting of the stud fastening portion 540 is completed, the fastening protrusions 543b come close contact with the outer surface of the stud bolt 520.

The clip portion 550 extends in one direction from the stud fastening portion 540 to surround and secure the wire harness 400, and includes an extension plate 551 extending upward from one side of the base 541 and formed in a curved shape such that an upper portion thereof is gradually spaced apart from the guide 542 toward an end portion, and a first clip ring 552 formed in a ring shape at an upper end portion of the extension plate 551 to surround the wire harness 400. The first clip ring 552 is positioned on a side opposite to the guide 542 with respect to the extension plate 551. One end of the first clip ring 552 extends integrally from the extension plate 551, and the other end is separated from the extension plate 551. With this structure, the first clip ring 552 can prevent disengagement of the wire harness 400 by being opened to secure the wire harness 400 and then returning to its original state by its own elasticity.

Note that a reinforcing portion 560 may be formed between the guide 542 and the extension plate 551 to reinforce a support strength of the extension plate 551, the reinforcing portion 560 being integrally formed with the base 541, the guide body 542a, and the extension plate 551.

In addition, the clip portion 550 is arranged in a direction opposite to the first and second fastening portions 130 and 220 with respect to the stud bolt 520, allowing a portion of the wire harness 400 secured by the clip portion 550 to be spaced farthest from the first and second fastening portions 130 and 220 compared to other portions.

Among all sections of the wire harness 400, the section passing over the bracket 200 has a curved arrangement shape due to the first fixing member 500, and the portion of the wire harness 400 secured by the first fixing member 500 may be positioned farthest from the first and second fastening members 130 and 220. When the wire harness 400 is arranged in this manner, the wire harness 400 is overall positioned farther from the first and second fastening members 130 and 220, compared to the related art in which the wire harness 400 is arranged in a linear shape, so that contact between the first fastening member 700 that fastens the first and second fastening members 130 and 220 to each other and the wire harness 400 can be minimized or prevented.

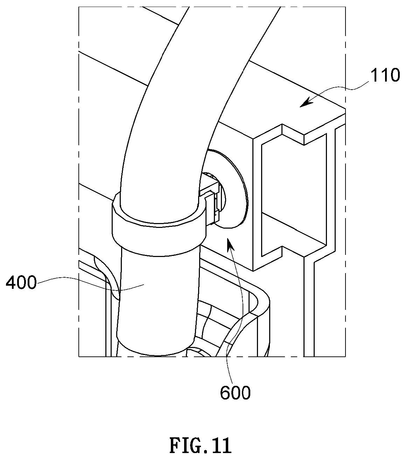

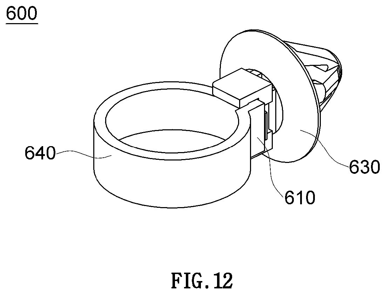

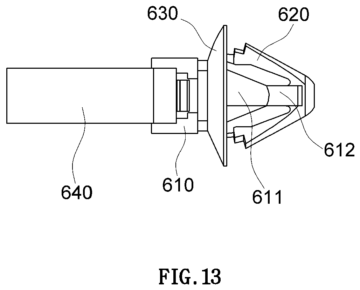

FIG. 11 is an enlarged view illustrating the wire harness secured to the cell frame by the second fixing member, FIG. 12 is a perspective view of the second fixing member, and FIG. 13 is a side view of the second fixing member.

The second fixing member 600 is fixed to the second frame hole of the cell frame 110 as described above, and includes a fixing body 610, a disengagement prevention piece 620, a front engagement plate 630, and a second clip ring 640.

The disengagement prevention piece 620 is integrally formed at one end of the fixing body 610, the second clip ring 640 is integrally formed at the other end of the fixing body 610, and the front engagement plate 630 is formed at a central portion between the disengagement prevention piece 620 and the second clip ring 640.

One end portion of the fixing body 610 is formed to pass through the second frame hole, and includes a tapered portion 611 whose cross-sectional area gradually decreases toward an end portion, and a support portion 612 extending from the end portion of the tapered portion 611 and supporting the disengagement prevention piece 620.

The disengagement prevention piece 620 is provided in plurality and formed to extend from an end portion of the support portion 612 toward one end of the fixing body 610 and to surround one end portion of the fixing body 610 while forming a gap with the fixing body 610. The disengagement prevention pieces 620 are each formed in a shape gradually widening outward from one end integrally connected to the support portion 612 toward the other end, which is directed toward the other end of the fixing body 610. One end portions of the disengagement prevention pieces 620 are formed to have a cross-sectional area smaller than an area of the second frame hole, and the other end portions of the disengagement prevention pieces 620 are widened to be larger than the area of the second frame hole while being spaced apart from the fixing body 610.

According to the disengagement prevention pieces 620 having such a structure, when one end of the fixing body 610 and the disengagement prevention pieces 620 are passed through the second frame hole to fix the second fixing member 600 to the second frame hole, the disengagement prevention pieces 620 are contracted inward toward the fixing body 610 while passing through the second frame hole. When the disengagement prevention pieces 620 completely pass through the second frame hole, they return to their original state by their own elastic force and engage with a rear surface of the mounting surface including the second frame hole, thereby preventing the second fixing member 600 from being disengaged.

The front engagement plate 630 is formed in a circular shape between the disengagement prevention pieces 620 and the second clip ring 640 and engages with a front surface of the mounting surface when fixing the second fixing member 600 to the second frame hole, thereby restricting further insertion of the fixing body 610. To this end, a diameter of the front engagement plate 630 is formed to be larger than a diameter of the second frame hole.

The second clip ring 640 is formed in a ring shape to surround and support the wire harness 400, with one end extending from the other end of the fixing body 610 and the other end being spaced from the fixing body 610. The second clip ring 640 can prevent disengagement of the wire harness 400 by being opened to secure the wire harness 400 and then returning to its original state by its own elasticity.

Note that the second frame hole and the second bracket holes 211 may be arranged on a straight line.

Although the battery module according to the preferred exemplary embodiment of the present disclosure, and the battery pack and the vehicle including the battery module have been described in detail with reference to the accompanying drawings, the present disclosure is not limited to the above-described exemplary embodiment and may be implemented in various modified forms within the scope of the claims.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

### <Explanation of Reference Numerals and Symbols>

| | | | |
|---|---|---|---|
| 1: | vehicle | 2: | battery pack |
| 10: | pack case | 11: | upper case |
| 12: | lower case | 20: | battery module |
| 100: | cell assembly | 110: | cell frame |
| 120: | first mounting surface | 130: | first fastening portion |
| 131: | first frame hole | 200: | bracket |
| 210: | second mounting surface | 211: | second bracket hole |
| 220: | second fastening portion | 221: | first bracket hole |
| 300: | BMS circuit board | 400: | wire harness |
| 500: | first fixing member | 510: | wire clip |
| 520: | stud bolt | 530: | nut |
| 540: | stud fastening portion | 541: | base |
| 542: | guide | 543: | fastening piece |
| 550: | clip portion | 551: | extension plate |
| 552: | first clip ring | 560: | reinforcing portion |
| 600: | second fixing member | 610: | fixing body |
| 611: | tapered portion | 612: | support portion |
| 620: | disengagement prevention piece | 630: | front engagement plate |
| 640: | second clip ring | 700: | first fastening member |
| 710: | bolt | 720: | nut |
| 800: | second fastening member | | |

## Claims

1. A battery module comprising:
a cell frame accommodating a battery cell therein;
a bracket mounted on the cell frame;
a fixing member mounted to the bracket and configured to secure a wire harness arranged above the bracket; and
a fastening member fastening the bracket to the cell frame.

2. The battery module of claim 1, wherein the fixing member maintains the wire harness spaced apart from the bracket and the fastening member.

3. The battery module of claim 1, wherein the cell frame comprises a first mounting surface on which the bracket is seated, and a first fastening portion vertically extending upward from opposite edges of the first mounting surface, and
the bracket comprises a second mounting surface seated on the first mounting surface, and a second fastening portion vertically extending upward from opposite edges of the second mounting surface.

4. The battery module of claim 3, wherein the fastening member comprises a first fastening member fastening the first and second fastening portions to each other, and a second fastening member fastening the first and second mounting surfaces to each other.

5. The battery module of claim 4, wherein a portion of a bracket section of the wire harness arranged above the bracket that is secured by the fixing member is positioned farther from the first fastening member than other portions of the bracket section.

6. The battery module of claim 5, wherein the wire harness is arranged above the second mounting surface, and a portion of the first fastening member protrudes from the first and second fastening portions toward the wire harness.

7. The battery module of claim 5, wherein the first and second fastening portions are arranged in a linear shape, and the wire harness is arranged in a curved shape by the fixing member.

8. The battery module of claim 4, wherein the second mounting surface has a plurality of spaced apart bracket holes through which the second fastening member passes.

9. The battery module of claim 8, wherein the fixing member is fixed to at least one of the spaced apart bracket holes.

10. The battery module of claim 9, wherein the fixing member comprises a stud bolt having one end portion that passes through the bracket hole, a nut arranged between the first and second mounting surfaces and fastened to one end portion of the stud bolt, and a wire clip fastened to another end portion of the stud bolt and supporting the wire harness.

11. The battery module of claim 10, wherein the wire clip comprises a stud fastening portion fitted around and fastened to the stud bolt, and a clip portion extending in one direction from the stud fastening portion and configured to support the wire harness.

12. The battery module of claim 11, wherein the clip portion is located in a direction opposite to the first and second fastening portions relative to the stud bolt, a portion of the wire harness secured by the clip portion being spaced farther from the first fastening member than other portions of the wire harness.

13. A battery pack comprising the battery module of any one of claims 1 to 12.

14. A vehicle comprising the battery pack of claim 13.
